# EUROPÄISCHE PATENTSCHRIFT

(11) **EP 2 533 995 B1**
(45) Veröffentlichungstag und Bekanntmachung des Hinweises auf die Patenterteilung: **13.11.2013**
(21) Anmeldenummer: 11703185.6
(22) Anmeldetag: 02.02.2011
(51) Int. Cl.: B60K 11/04

(54) **HALTEANORDNUNG FÜR FUNKTIONSEINHEIT IN KRAFTFAHRZEUGEN**
HOLDING ARRANGEMENT FOR A FUNCTIONAL UNIT IN MOTOR VEHICLES
ARRANGEMENT DE MAINTIEN POUR UNITÉ FONCTIONNELLE DANS DES VÉHICULES AUTOMOBILES

(30) Priorität: 10.02.2010 DE 102010001783
(43) Veröffentlichungstag der Anmeldung: 19.12.2012
(73) Patentinhaber: ZF Friedrichshafen AG, 88038 Friedrichshafen (DE)
(72) Erfinder: DUHAUTOIS, Ferdinand, F-95600 Eaubonne (FR)
(86) Internationale Anmeldenummer: PCT/EP2011/051472
(87) Internationale Veröffentlichungsnummer: WO 2011/098381

(56) Entgegenhaltungen:
- EP-A1- 1 988 005
- EP-A2- 1 106 413
- EP-A2- 1 247 681
- EP-A2- 1 958 811
- WO-A1-03/052341
- DE-A1-102009 010 788

## Beschreibung

Die Erfindung betrifft eine Halteanordnung für ein Kraftfahrzeug, deren Bestandteil eine in einem Kraftfahrzeug festzulegende Funktionseinheit ist, welche mit Hilfe eines zu der erfindungsgemäßen Halteanordnung gehörenden Haltelements unmittelbar oder mittelbar an der Fahrzeugkarosserie festgelegt und schwingungsdämpfend gelagert wird. Sie bezieht sich vorzugsweise auf eine Lösung zur Festlegung des Kühlers eines Kraftfahrzeugs.
In der Kraftfahrzeugtechnik ist es üblich, die unterschiedlichen Funktionseinheiten eines Kraftfahrzeugs, nämlich einzelne Bauteile, Baugruppen oder Aggregate, mit Hilfe von Elastomer- beziehungsweise Gummielementen festzulegen, die dabei gleichzeitig als schwingungsdämpfende Lager wirken, welche es verhindern, dass beim Betrieb des Kraftfahrzeugs auftretende Schwingungen der jeweiligen Funktionsgruppe auf die Fahrzeugkarosserie übertragen werden. In diesem Zusammenhang ist es auch bekannt, den Kühler eines Kraftfahrzeugs mittels entsprechender, der schwingungsdämpfenden Lagerung dienender Elastomerbeziehungsweise Gummielemente an der Fahrzeugkarosserie festzulegen.
Lösungen dieser Art sind beispielsweise aus der gattungsgemässen EP 1 247 681 A2 und der EP 1 106 413 B1 bekannt. Beide Lösungen beschreiben die Festlegung und Lagerung eines Kraftfahrzeugkühlers mittels einer oder mehrerer elastomerer blockförmiger Elemente. Diese Elastomerblöcke weisen jeweils einen Durchbruch in Form eines Langlochs auf, mit welchem ein an dem Kühler korrespondierend ausgebildeter Stift beziehungsweise Pin in Eingriff gebracht ist. Der jeweilige Stift des Kühlers ist in dem Durchbruch des zugehörigen Elastomerblocks gegen eine durch eine Einschnürung beziehungsweise Verengung, das heißt einen Bereich mit einer gegenüber dem Stift geringeren Breite, bewirkte Widerstandskraft von einer ersten, bei der Montage das Einführen des Stiftes in den Durchbruch ermöglichenden Position in der Längsrichtung des langlochförmigen Durchbruchs, bezogen auf die Fahrtrichtung des mit dem Kühler auszustattenden Fahrzeugs, nach vorne in eine zweite bestimmungsgemäße Endposition bewegbar. Entsprechend umgekehrt ist der Stift bei der Demontage von der vorderen in die hintere, das Entfernen des Stiftes aus dem Durchbruch ermöglichende Position bewegbar. Zwar wird bei den beschriebenen Lösungen der mit dem Durchbruch in Eingriff gebrachte Stift des Kühlers beim Normalbetrieb des Fahrzeugs aufgrund der einer Bewegung des Stiftes in dem Durchbruch durch die Verengung entgegengesetzten Widerstandskraft in der vorderen Position gehalten. Jedoch ist es hierbei schwierig, die vorgenannte Widerstandskraft richtig zu bemessen. Insoweit ist die Gefahr gegeben, dass der Kühler entweder bereits durch eine relativ geringe Kraft ungewollt aus der bestimmungsgemäßen Betriebsposition in eine hintere Position bewegt wird oder die Widerstandskraft zu groß ist, um dem Kühler, im Falle eines leichten Aufpralls, ein seine Beschädigung verhinderndes Ausweichen nach hinten zu ermöglichen.

Aufgabe der Erfindung ist es, eine Halteanordnung zur Festlegung und schwingungsdämpfenden Lagerung einer Funktionseinheit beziehungsweise Funktionsgruppe eines Kraftfahrzeugs bereitzustellen, welche es der Funktionseinheit beim Überschreiten einer vorgegebenen, beispielsweise durch einen leichten Aufprall verursachten, entgegen der Fahrtrichtung wirkenden Kraft sicher ermöglicht, dieser Kraft zur Vermeidung von Beschädigungen auszuweichen und sich dazu aus ihrer bestimmungsgemäßen Betriebsposition herauszubewegen, wobei nach der Beseitigung eventueller, durch die Kraft an dem Kraftfahrzeug verursachter Schäden eine Rückführung der betreffenden Funktionseinheit in ihre bestimmungsgemäße Ausgangsposition ermöglicht sein soll. Die Halteanordnung soll dabei auf einfache Weise eine Festlegung von Grenzwerten für auf die Funktionseinheit wirkende Kräfte ermöglichen, bei deren Überschreiten die Funktionseinheit aus der Betriebsposition heraus oder in diese hinein bewegbar ist.

Die Aufgabe wird durch eine Halteanordnung mit den Merkmalen des Patentanspruchs 1 gelöst. Vorteilhafte Aus- beziehungsweise Weiterbildungen der Erfindung sind durch die Unteransprüche gegeben.

Die zur Lösung der Aufgabe vorgeschlagene Halteanordnung besteht aus mindestens einem Halteelement und einer Funktionseinheit eines Kraftfahrzeugs, welche mittels dieses mindestens einen Halteelements unmittelbar oder mittelbar an der Fahrzeugkarosserie festgelegt und schwingungsdämpfend gelagert ist. Im Falle einer mittelbaren Festlegung der betreffenden Funktionseinheit an der Fahrzeugkarosserie sind dabei das oder die Halteelemente, durch welche die Funktionseinheit gehalten wird, an anderen Funktionsgruppen, das heißt Bauteilen, Baugruppen oder Aggregaten des Kraftfahrzeugs, angeordnet, welche ihrerseits mit der Fahrzeugkarosserie verbunden sind. Wie aus dem Stand der Technik bekannt, ist in dem oder den Halteelement/-en eine Ausnehmung in Form eines Langlochs ausgebildet, mit welcher jeweils ein korrespondierender, an der Funktionseinheit ausgebildeter oder an dieser befestigter Stift in Eingriff gebracht ist. Dabei ist die langlochförmige Ausnehmung des oder der Halteelemente so ausgebildet, dass sich deren Hauptachse in der Fahrzeuglängsrichtung erstreckt.
Erfindungsgemäß ist das Halteelement durch einen die Ausnehmung einfassenden formstabilen Körper gebildet, welcher - vorzugsweise vollständig - mit Elastomer umhüllt ist. Der vorgenannte, von dem Elastomer umhüllte formstabile Körper weist zwei an den Längsseiten der Ausnehmung gegenüberliegend angeordnete, in die Ausnehmung hineinragende Federzungen auf, welche aus dem Material des formstabilen Körpers gebildet und vorzugsweise ebenfalls von dem Elastomer umhüllt sind. Durch die beiden genannten, in die Ausnehmung des Halteelements hineinragenden Federzungen ist in der Ausnehmung eine Verengung ausgebildet. Die Ausbildung der verengten langlochartigen Ausnehmung ist derart, dass der mit ihr in Eingriff gebrachte Stift der Funktionseinheit die Verengung im Falle einer Bewegung des Stifts, welche durch eine auf die Funktionseinheit wirkende Kraft verursacht wird, nur passieren kann, wenn der parallel zur Fahrzeuglängsachse wirksame Anteil dieser Kraft einen durch die Federkraft der Federzungen bestimmten Grenzwert überschreitet. Dies gilt gleichermaßen für eventuelle Bewegungen des Stifts entgegen der Fahrtrichtung, wie auch für Bewegungen in Fahrtrichtung, wobei der jeweilige Grenzwert, bei dessen Überschreiten dem Stift ein Passieren der Verengung ermöglicht ist, für die beiden zuvor genannten verschiedenen, aber jedenfalls parallel zur Fahrzeuglängsachse gerichteten Bewegungsrichtungen unterschiedlich sein kann. Der Begriff Fahrtrichtung bezieht sich in diesem Kontext sowie bei den nachfolgenden Darstellungen vorzugsweise auf die Vorwärtsfahrtrichtung eines Kraftfahrzeugs, wenngleich eine entsprechende, einer Beschädigung durch Aufprallkräfte vorbeugende Lagerung einer Fahrzeugfunktionseinheit selbstverständlich auch bezogen auf die Rückwärtsfahrtrichtung erfolgen kann.
Vor dem Hintergrund dieses Verständnisses und im Hinblick auf verschiedene Grenzwerte für die, eine Bewegung des Stiftes über die Verengung der Ausnehmung hinweg ermöglichenden Kräfte ist es praxisgerecht, wenn beispielsweise der besagte Grenzwert für eine durch einen Aufprall verursachte, entgegen der Fahrtrichtung wirkende Kraft höher ist, als der Kraftgrenzwert, welcher von einem Mechaniker zu überwinden ist, wenn er die betreffende Funktionseinheit nach der Beseitigung eventueller Schäden an anderen Teilen des Kraftfahrzeugs oder wenn eine Austauschfunktionseinheit gleicher Art, in die bestimmungsgemäße, bezogen auf die (Vorwärts-) Fahrtrichtung vor der Verengung der langlochartigen Ausnehmung des Halteelements gelegene Betriebsposition (zurück) bewegen möchte.
Durch die Ausbildung des Halteelements aus einem formstabilen, mit Elastomer überzogenen beziehungsweise von Elastomer umhüllten Material und mit den in die Ausnehmung hineinragenden Federzungen ist gewährleistet, dass die mittels der Halteanordnung festgelegte Funktionseinheit im Normalbetrieb des Kraftfahrzeugs in ihrer dafür vorgesehenen Lage verbleibt, sich aber beim Auftreten von Kräften, wie sie etwa durch einen leichten Aufprall verursacht werden, über die Verengung hinwegbewegen kann. Demgemäß weicht die betreffende Funktionseinheit bei einem Aufprall beziehungsweise Crash unter nur teilweiser Aufnahme der Aufprallenergie entgegen der Fahrtrichtung zurück, so dass ihrer Beschädigung vorgebeugt wird.
Entsprechend dem bevorzugten Einsatzweck der erfindungsgemäßen Halteanordnung dient diese zur Festlegung und schwingungsdämpfenden Lagerung eines Kraftfahrzeugkühlers. Folglich handelt es sich bei der zur Halteanordnung gehörenden Funktionseinheit, welche den mindestens einen mit einer Ausnehmung eines Halteelements in Eingriff zu bringenden Stift beziehungsweise Pin aufweist, vorzugsweise um einen solchen Kühler. Dabei resultiert aus der schwingungsdämpfenden Lagerung ebenso eine Dämpfung auf den Kühler wirkender Schwingungen, wie eine Dämpfung von Vibrationen des Kühlers selbst und somit eine weitgehende Verhinderung der Übertragung solcher Kühlervibrationen auf die Fahrzeugkarosserie und die Fahrgastzelle. Bezogen auf diesen Anwendungsfall der Erfindung ist die Federkraft der Federzungen des oder der Halteelemente durch eine entsprechende Materialwahl für den vom Elastomer umgebenen formstabilen Körper und damit für die Federzungen sowie durch eine entsprechende Geometrie und insbesondere Materialstärke der Federzungen so ausgelegt, dass der Grenzwert, bei dessen Überschreitung ein entgegen der Fahrtrichtung wirkender Anteil einer auf den Kühler wirkenden Kraft eine dieser Kraft ausweichende Bewegung des Kühlers verursacht, zwischen 300 N und 700 N beträgt. Bis zum Überschreiten dieses Grenzwertes durch den entsprechenden Anteil einer auf ihn wirkenden Kraft verbleibt der Kühler in seiner bestimmungsgemäßen Lage, bei welcher der jeweilige Stift des Kühlers in der Ausnehmung des zugehörigen Halteelements bezogen auf die Fahrtrichtung vorne, also vor der Verengung positioniert ist.
Zur Ausbildung des formstabilen, mit dem Elastomer zu umhüllenden Körpers des beziehungsweise der Halteelemente kommen als Material insbesondere Metall und Kunststoff in Betracht. Unter Kostengesichtspunkten und im Hinblick auf das Bestreben einer Gewichtsreduktion besteht der formstabile Körper vorzugsweise aus einem Kunststoff.
Die Erfindung ist vorteilhaft dadurch weitergebildet, dass die Ausnehmung des oder der Halteelemente an ihrer Innenkontur eine wellenförmige Profilierung aufweist, welche durch eine entsprechende Ausformung des den formstabilen Körper umhüllenden Elastomers realisiert ist. Dabei sind insbesondere in dem bezüglich der Fahrtrichtung hinter der Verengung gelegenen Bereich der Ausnehmung Aufwölbungen ausgebildet, durch welche die Ausnehmung jeweils abschnittsweise einen konischen Verlauf aufweist. Hierdurch wird erreicht, dass der Stift der mittels des betreffenden Halteelements festgelegten Funktionseinheit im Falle eines Aufpralls und seines Zurückweichens in die hintere Position innerhalb der Ausnehmung nicht wieder in die vordere Position zurückpendelt.
Das oder die Halteelemente sind vorzugsweise als so genannte Snap-in-Adapter ausgebildet, wobei am Umfang des formstabilen Körpers mindestens zwei Rastelemente ausgebildet sind, welche vorzugsweise, bezogen auf die Fahrzeuglängsrichtung, vorne und hinten an dem jeweiligen Haltelement angeordnet sind. Das entsprechend beschaffene Halteelement kann dabei in eine Aussparung eines Flächenelements eingedrückt beziehungsweise eingeschnappt oder eingerastet werden, welche unmittelbar an der Fahrzeugkarosserie oder einer anderen mit der Fahrzeugkarosserie verbundenen Funktionseinheit ausgebildet ist. Vorzugsweise ragt der eigentliche Körper des Halteelements mit der darin ausgebildeten Ausnehmung für den Stift der zu haltenden Funktionseinheit seitlich über die Rastelemente hinaus, so dass das Halteelement mit seinen Außenmaßen auch die betreffende Aussparung, in welche es mit seinen Rastelementen hineingedrückt wird, überragt. Ein dabei zwischen dem eigentlichen Haltekörper des Halteelements und der Aussparung verbleibender Spalt, wird vorzugsweise durch eine elastomere Lippe geschlossen, welche aus dem den Körper des Halteelements umhüllenden Elastomer ausgebildet ist. Über diese Lippe ist das Halteelement und mit ihm die mit seiner Hilfe gelagerte Funktionseinheit nahezu spielfrei, aber jedenfalls elastisch in der betreffenden Aussparung gelagert und damit, bezogen auf Schwingungen, gegen die angrenzenden Fahrzeugteile entkoppelt. Selbstverständlich sind aber ebenso Ausbildungsformen der erfindungsgemäßen Halteanordnung möglich, bei denen das Halteelement an angrenzenden Funktionseinheiten oder Baugruppen mittels einer oder vorzugsweise mehrerer Verschraubungen befestigt wird.
Entsprechend einer Weiterbildung der Erfindung ist es vorgesehen, dass das den formstabilen Körper des Halteelements umhüllende Elastomer auf der, der Funktionseinheit zugewandten Seite eine Profilierung in Form mehrer konzentrisch um den Rand herum angeordneter, aus dem Elastomer gebildeter Rillen oder Rippen aufweist, wobei der Rand gegebenenfalls außerdem terrassenförmig abgestuft sein kann. An dieser Profilierung gelangt der Bereich der Außenkontur der mittels des Halteelements festgelegten Funktionseinheit zur Anlage, an welchen der mit der Ausnehmung des Halteelements in Eingriff zu bringende Stift beziehungsweise Pin dieser Funktionseinheit angeformt ist oder an dem dieser Stift befestigt ist. Dabei bewirkt die zuvor beschriebene Profilierung des Halteelements, dass dessen elastomere Oberfläche in diesem Bereich eine geringe dynamische Steifigkeit aufweist. Hierdurch werden auch Stoßbelastungen mit größerer Amplitude gut abgefangen beziehungsweise gedämpft, welche gegebenenfalls auf die festgelegte Funktionseinheit wirken.

Die Erfindung soll nachfolgend anhand eines Ausführungsbeispiels nochmals erläutert werden. In den zugehörigen Zeichnungen zeigen:
- Fig. 1:: eine räumliche Ansicht eines Halteelements entsprechend einer möglichen Ausbildungsform der Erfindung,
- Fig. 2:: nochmals das Halteelement gemäß Fig. 1 als Snap-in-Adapter,
- Fig. 3:: eine Draufsicht auf das Halteelement gemäß Fig. 1 und Fig. 2,
- Fig. 4:: einen mittels Halteelementen gemäß den Figuren 1 bis 3 festgelegten Kraftfahrzeugkühler.

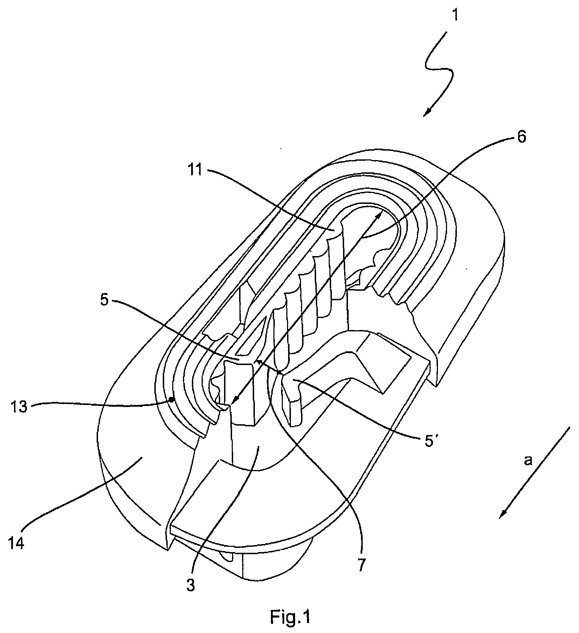

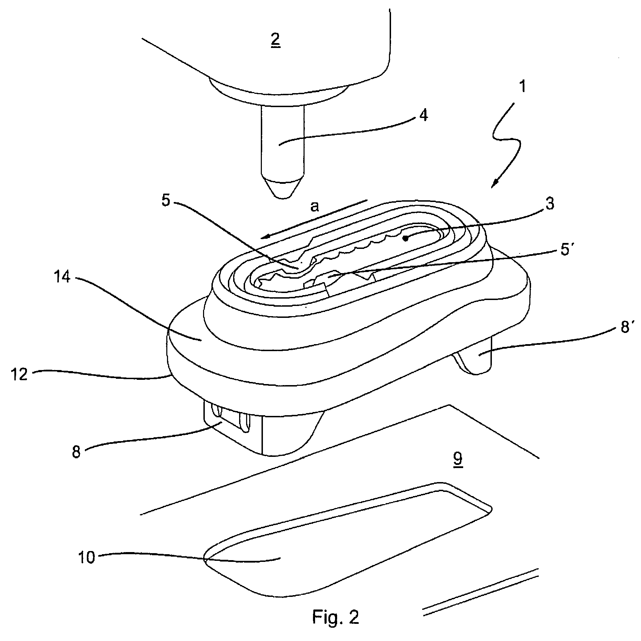

Die Fig. 1 zeigt ein Halteelement 1 der erfindungsgemäßen Halteanordnung gemäß einer möglichen Ausbildungsform der Erfindung in einer räumlichen Darstellung, wobei das Halteelement 1 zur besseren Veranschaulichung mit einem gedachten Ausbruch gezeigt ist. Das Halteelement 1 besteht aus einem formstabilen, im Beispiel ringförmigen beziehungsweise ovalen Körper aus Kunststoff, welcher vollständig mit Gummi umhüllt ist. Dieser formstabile Körper beziehungsweise das Halteelement 1 weist eine langlochartige Ausnehmung 3 auf, mit welcher ein Stift 4 einer zu haltenden beziehungsweise festzulegenden Funktionseinheit 2 (siehe hierzu Fig. 2) in Eingriff zu bringen ist. In die Ausnehmung 3 ragen zwei aus dem Material des formstabilen Körpers ausgebildete Federzungen 5, 5' hinein, welche an den Längsseiten der Ausnehmung 3, einander gegenüberliegend angeordnet sind. In der Figur ist, mit Blick auf die links im Bild befindliche Federzunge 5, zu erkennen, dass auch die Federzungen 5, 5' von dem Elastomer umhüllt sind. Dies gilt selbstverständlich auch für die rechte Federzunge 5', welche in der Darstellung lediglich zur besseren Veranschaulichung durch einen gedachten Ausbruch von dem Elastomer freigestellt ist.
Durch die nach innen ragenden Federzungen 5, 5' weist die mit dem Stift 4 der festzulegenden Funktionseinheit 2 (siehe Fig. 2) in Eingriff zu bringende Ausnehmung 3 des Halteelements 1 eine Verengung 7 auf. Nach der bestimmungsgemäßen Positionierung der mittels des Halteelements 1 festzulegenden Funktionseinheit 2, vorzugsweise eines Kraftfahrzeugkühlers, ragt der an der betreffenden Funktionseinheit 2 ausgebildete, mit der Ausnehmung 3 des Halteelements 1 in Eingriff zu bringende Stift 4, bezogen auf die Fahrtrichtung des Fahrzeugs vor der Verengung 7 in die Ausnehmung 3 hinein. Die Fahrtrichtung des Fahrzeugs ist in der Figur durch die Pfeilspitze der die Fahrzeuglängsrichtung a kennzeichnenden Linie symbolisiert. Sofern auf den Stift 4 und damit auf die Funktionseinheit 2 eine Kraft wirkt, bei welcher der entgegen der Fahrtrichtung wirksame Anteil einen Betrag von etwa 500 N übersteigt, wird der in die Ausnehmung 3 hineinragende Stift 4 gegen die Federkraft der Federzungen 5, 5' innerhalb der Ausnehmung 3 in den Bereich hinter der Verengung 7 verschoben, so dass die mittels des Halteelements 1 festgelegte Funktionseinheit 2, beispielsweise bei einem entsprechend starken Aufprall, nach hinten ausweichen kann und hierdurch gegebenenfalls vor Beschädigungen geschützt wird. In einem solchen Fall kann die Funktionseinheit 2, sofern sie unbeschädigt geblieben ist, zum Beispiel nach dem Austausch einer eventuell beschädigten Stoßstange und/oder Frontschürze wieder in die bestimmungsgemäße Ausgangsposition zurückbewegt werden, wobei die hierbei durch einen Mechaniker gegen die Federkraft der Federzungen 5, 5' aufzubringende Kraft geringer ist, als die im Falle eines Aufpralls das Verschieben des Kühlers nach hinten bewirkende Kraft. Letzteres wird dadurch erreicht, dass der Anstieg der durch die Federelemente gewissermaßen ausgebildeten Rampen, wie aus der Abbildung ersichtlich, in der Fahrtrichtung geringer ist, als entgegen der Fahrtrichtung und dass der Anlenkpunkt über den die Federzungen 5, 5' am Rand der Ausnehmung 3 befestigt sind, in Fahrtrichtung hinten liegt. Die Fig. 2 zeigt nochmals ein Halteelement 1 und, als Bestandteil der erfindungsgemäßen Halteanordnung, einen Teil einer mittels des Halteelements 1 festzulegenden Funktionseinheit 2 mit dem daran ausgebildeten, mit der Ausnehmung 3 des Halteelements 1 in Eingriff zu bringenden Stift 4. Die Abbildung zeigt das Halteelement 1 gemäß der Fig. 1 in einem etwas anderen Blickwinkel, aus welchem erkennbar wird, dass das Halteelement 1 als ein Snap-in-Adapter ausgebildet ist. Dazu sind an der Unterseite des Halteelements 1 zwei Rastelemente 8, 8' ausgebildet. Beim bestimmungsgemäßen Einbau wird das Halteelement 1 in eine Aussparung 10 eines Flächenelements 9 eingerastet, das als Teil der Fahrzeugkarosserie oder einer anderen Funktionseinheit beziehungsweise Funktionsgruppe ausgebildet ist, an welcher die in der Abbildung oben ausschnittsweise gezeigte, mit dem Stift 4 versehene Funktionseinheit 2 mittels des Halteelements 1 festzulegen ist. Dabei greifen die Rastelemente 8, 8' des Halteelements 1 unter den Rand der entsprechenden Aussparung 10 in dem betreffenden Flächenelement 9. Die Aussparung 10 selbst wird durch den oberen Teil des das Halteelement 1 ausbildenden Körpers, also den eigentlichen Haltekörper 14, abgedeckt. Vorzugsweise ist an der Unterseite dieses oberen Teils eine auf dem Umfang umlaufende Gummilippe 12 ausgebildet, welche einen zwischen dem Halteelement 1 und der Aussparung 10 des Flächenelements 9 verbleibenden Spalt schließt und über die das Halteelement 1 in der Aussparung 10 nahezu spielfrei gelagert ist.

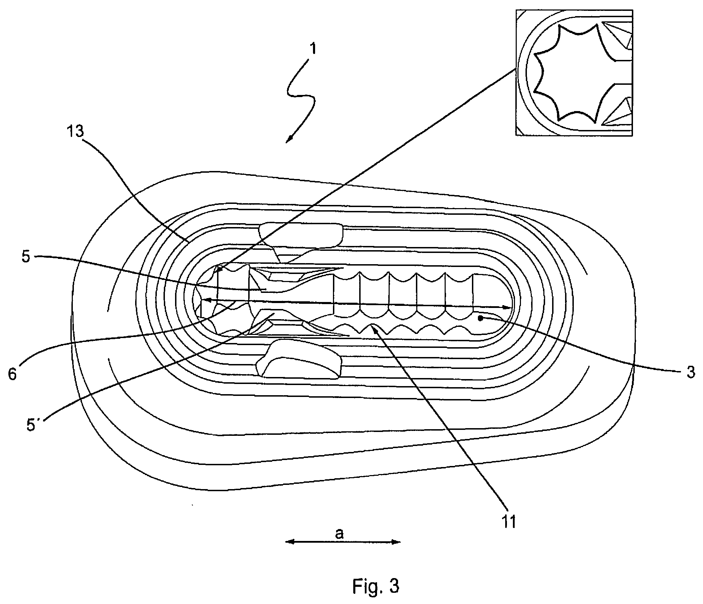

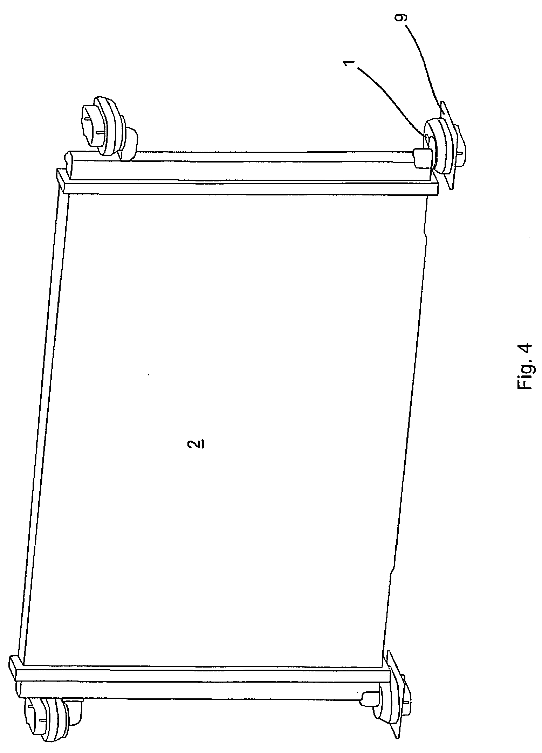

Die Fig. 3 zeigt das Halteelement 1 nochmals aus einem Blickwinkel, in welcher dieses in der Art einer Draufsicht, aber ebenfalls in räumlicher Darstellung gezeigt ist. In dieser Ansicht ist besonders gut zu erkennen, dass die Ausnehmung 3, mit welcher der Stift 4 der festzulegenden Funktionseinheit 2 in Eingriff zu bringen ist, an ihrer Innenkontur eine Profilierung aufweist. Wie ersichtlich ist dabei insbesondere, bezogen auf die wiederum durch den Pfeil symbolisierte Fahrtrichtung, im hinteren Teil der Ausnehmung 3 eine Mehrzahl von Auswölbungen 11 ausgebildet, durch welche verhindert wird, dass der Stift 4 der festgelegten Funktionseinheit 2, nachdem er sich im Falle eines Aufpralls mit einer Kraft von über 500 N aus der vorderen in die hintere Position bewegt hat, wieder selbständig nach vorne zurückpendelt. Aber auch der vordere Bereich der Ausnehmung 3, in den der Stift 4 der festzulegenden Funktionseinheit 2 in bestimmungsgemäßer Einbaulage, das heißt im Normalbetrieb des Fahrzeugs hineinragt, weist an seiner Innenkontur eine entsprechende Profilierung des Elastomers beziehungsweise Gummis auf. Hierdurch wird für den durch die Ausnehmung 3 aufgenommenen Stift 4 der Funktionseinheit 2 eine besonders niedrige Steifigkeit der mit dem Elastomer bedeckten Innenkontur der Ausnehmung 3 realisiert, so dass die mittels des Halteelements 1 festgelegte Funktionseinheit 2 besonders gut schwingungsdämpfend gelagert ist. Aus der Abbildung ist ferner ersichtlich, dass das den formstabilen Körper des Halteelements umhüllende Elastomer bei dem gezeigten Ausbildungsbeispiel um den Rand der Ausnehmung 3 herum eine Profilierung 13 in Form einer Rippung aufweist. Durch diese Profilierung 13 wird die dynamische Steifigkeit des Halteelements 1 für die im Bereich der Profilierung 13 zur Anlage gelangende Außenkontur der festzulegenden Funktionseinheit 2 reduziert. Wie aus der Fig. 4 ersichtlich, handelt es sich bei der besagten Funktionseinheit 2 vorzugsweise um den Kühler eines Kraftfahrzeugs, welcher mittels vier Halteelementen 1 der zuvor dargestellten Art in dem Kraftfahrzeug festgelegt und schwingungsdämpfend gelagert wird.

### Bezugszeichenliste

- 1: Halteelement
- 2: Funktionseinheit
- 3: Ausnehmung
- 4: Stift, Pin
- 5, 5': Federzunge
- 6: Hauptachse
- 7: Verengung
- 8, 8': Rastelement
- 9: Flächenelement
- 10: Aussparung
- 11: Aufwölbung
- 12: Lippe
- 13: Profilierung
- 14: Haltekörper

## Patentansprüche

1. Halteanordnung, bestehend aus mindestens einem Halteelement (1) und einer Funktionseinheit (2) eines Kraftfahrzeugs, welche mittels des mindestens einen Halteelements (1) unmittelbar oder mittelbar an der Fahrzeugkarosserie festgelegt und schwingungsdämpfend gelagert ist, indem ein an der Funktionseinheit (2) angeordneter Stift (4) mit einer Ausnehmung (3) des betreffenden Halteelements (1) in Eingriff gebracht ist, wobei die Ausnehmung (3) in Form eines Langlochs ausgebildet ist, dessen Hauptachse (6) sich in der Fahrzeuglängsrichtung (a) erstreckt, **dadurch gekennzeichnet, dass** das Halteelement (1) durch einen die Ausnehmung (3) einfassenden formstabilen, mit Elastomer umhüllten Körper gebildet ist, der zwei an den Längsseiten der Ausnehmung (3) gegenüberliegend angeordnete, in die Ausnehmung (3) hineinragende Federzungen (5, 5') aufweist, durch welche in der Ausnehmung (3) eine Verengung (7) ausgebildet ist, die bei einer Bewegung des Stiftes (4) in der Ausnehmung (3) von dem Stift (4) nur beim Überschreiten eines von der Federkraft der Federzungen (5, 5') bestimmten Grenzwerts durch den parallel zur Fahrzeuglängsrichtung (a) wirksamen Anteil einer auf die Funktionseinheit (2) wirkenden, die entsprechende Bewegung des Stiftes (4) verursachenden Kraft passierbar ist.

2. Halteanordnung nach Anspruch 1, **dadurch gekennzeichnet, dass** die Federzungen (5, 5') so ausgebildet sind, dass der Grenzwert, bei dessen Überschreiten durch den in der Fahrzeuglängsrichtung (a) wirksamen Anteil einer auf die Funktionseinheit (2) wirkenden Kraft dem Stift (4) das Passieren der Verengung (7) entgegen der Fahrtrichtung ermöglicht ist, abweicht von dem entsprechenden Grenzwert für eine Bewegung des Stiftes (4) in der Fahrtrichtung.

3. Halteanordnung nach Anspruch 1 oder 2, **dadurch gekennzeichnet, dass** es sich bei der Funktionseinheit (2) um den Kühler eines Kraftfahrzeugs handelt, welcher mittels zwei oder mehr Haltelementen (1) an der Fahrzeugkarosserie festgelegt und schwingungsdämpfend gelagert ist.

4. Halteanordnung nach Anspruch 3, **dadurch gekennzeichnet, dass** der Stift (4) der Funktionseinheit (2) im Normalbetrieb des Kraftfahrzeugs, bezogen auf die Fahrtrichtung des Kraftfahrzeugs, vor der Verengung (7) in die Ausnehmung (3) hineinragt und dass die Federkraft der Federzungen (5, 5') durch die Wahl des Materials für den formstabilen Körper des Halteelements (1) und dessen Geometrie so bemessen ist, dass sich der Stift (4) bei einer auf ihn wirkenden Kraft hinter die Verengung (7) bewegt, wenn der gegen die Fahrtrichtung wirksame Anteil dieser Kraft einen zwischen 300 N und 700 N liegenden Grenzwert übersteigt.

5. Halteanordnung nach einem Ansprüche 1 bis 4, **dadurch gekennzeichnet, dass** der das Halteelement (1) ausbildende, von dem Elastomer umhüllte formstabile Körper aus einem Kunststoff besteht.

6. Halteanordnung nach einem der Ansprüche 1 bis 5, **dadurch gekennzeichnet, dass** die Innenkontur der Ausnehmung (3) des Halteelements (1) profiliert ist, indem entlang dieser Kontur aus dem den formstabilen Körper des Halteelements umhüllenden Elastomer eine Mehrzahl in die Aufnehmung (3) hineinragender Aufwölbungen (11) ausgebildet ist.

7. Halteanordnung nach einem der Ansprüche 1 bis 6, **dadurch gekennzeichnet, dass** das Halteelement (1) als ein in eine Aussparung (10) eines Flächenelements (9) der Fahrzeugkarosserie oder eines mit der Fahrzeugkarosserie verbundenen Fahrzeugteils einzurastendes Element ausgebildet ist, wobei das Haltelement (1) mindestens zwei Rastnasen (8, 8') aufweist, welche sich nach dem Einführen in die betreffende Aussparung (10) unter deren Rand schieben.

8. Halteanordnung nach Anspruch 7, **dadurch gekennzeichnet, dass** das Halteelement (1) über eine, auf der den Rastnasen (8, 8') zugewandeten Seite des Halteelements (1) ausgebildete Lippe (12) des seinen formstabilen Körper umhüllenden Elastomers in der von den Rastnasen (8, 8') hintergriffenen Aussparung (10) gelagert ist.

9. Halteanordnung nach einem der Ansprüche 1 bis 8, **dadurch gekennzeichnet, dass** das Halteelement (1) auf seiner der Funktionseinheit (2) zugewandten Seite in dem, seinen formstabilen Körper umhüllenden Elastomer eine Profilierung (13) in Form mehrerer in dem Elastomer ausgebildeter und konzentrisch um den Rand der langlochförmigen Ausnehmung (3) angeordneter Rillen oder Rippen aufweist, an welcher ein den Stift (4) umgebender Bereich der Außenkontur der festzulegenden Funktionseinheit (2) zur Anlage gelangt.

## Claims

1. Holding arrangement consisting of at least one holding element (1) and a functional unit (2) of a motor vehicle, which functional unit is fixed directly or indirectly on the vehicle body and is mounted in a vibration-damping manner by means of the at least one holding element (1) by a pin (4), which is arranged on the functional unit (2), being brought into engagement with a recess (3) of the holding element (1) concerned, wherein the recess (3) is designed in the form of an elongated hole, the main axis (6) of which extends in the longitudinal direction (a) of the vehicle, **characterized in that** the holding element (1) is formed by a dimensionally stable, elastomer-covered body which surrounds the recess (3) and has two spring tongues (5, 5') which are arranged opposite each other on the longitudinal sides of the recess (3), project into the recess (3) and by means of which a constriction (7) is formed in the recess (3), which constriction can be passed by the pin (4) during a movement of the pin (4) in the recess (3) only upon a limit value, which is determined by the spring force of the spring tongues (5, 5'), being exceeded by the portion, which is effective parallel to the longitudinal direction (a) of the vehicle, of a force which acts on the functional unit (2) and causes the corresponding movement of the pin (4).

2. Holding arrangement according to Claim 1, **characterized in that** the spring tongues (5, 5') are designed in such a manner that the limit value, upon the exceeding of which by the portion, which is effective in the longitudinal direction (a) of the vehicle, of a force which acts on the functional unit (2) the pin (4) can pass the constriction (7) counter to the direction of travel, deviates from the corresponding limit value for a movement of the pin (4) in the direction of travel.

3. Holding arrangement according to Claim 1 or 2, **characterized in that** the functional unit (2) is the radiator of a motor vehicle, which radiator is fixed on the vehicle body and is mounted in a vibration-damping manner by means of two or more holding elements (1).

4. Holding arrangement according to Claim 3, **characterized in that**, during normal operation of the motor vehicle, the pin (4) of the functional unit (2) projects into the recess (3) in front of the constriction (7), with reference to the direction of travel of the motor vehicle, and **in that** the spring force of the spring tongues (5, 5') is dimensioned by the choice of the material for the dimensionally stable body of the holding element (1) and the geometry thereof in such a manner that the pin (4), when a force acts thereon, moves behind the constriction (7) when the portion, which is effective counter to the direction of travel, of said force exceeds a limit value lying between 300 N and 700 N.

5. Holding arrangement according to one of Claims 1 to 4, **characterized in that** the elastomer-covered, dimensionally stable body which forms the holding element (1) is composed of a plastic.

6. Holding arrangement according to one of Claims 1 to 5, **characterized in that** the inner contour of the recess (3) of the holding element (1) is profiled by a plurality of bulges (11) projecting into the recess (3) being formed along said contour from the elastomer covering the dimensionally stable body of the holding element.

7. Holding arrangement according to one of Claims 1 to 6, **characterized in that** the holding element (1) is designed as an element which can latch into a cutout (10) in a plane element (9) of the vehicle body or in a vehicle part connected to the vehicle body, wherein the holding element (1) has at least two latching lugs (8, 8') which, following insertion into the relevant cutout (10), are pushed under the edge thereof.

8. Holding arrangement according to Claim 7, **characterized in that** the holding element (1) is mounted in the cutout (10), behind which the latching lugs (8, 8') engage, via a lip (12) of the elastomer covering the dimensionally stable body of the holding element, the lip being formed on that side of the holding element (1) which faces the latching lugs (8, 8').

9. Holding arrangement according to one of Claims 1 to 8, **characterized in that** the holding element (1), on the side thereof which faces the functional unit (2), has, in the elastomer covering the dimensionally stable body thereof, a profiled structure (13) in the form of a plurality of scores or ribs which are formed in the elastomer and are arranged concentrically around the edge of the recess (3) in the form of an elongated hole, against which profiled structure a region of the outer contour of the functional unit (2) which is to be fixed, the region surrounding the pin (4), comes to bear.

## Revendications

1. Agencement de maintien, constitué d'au moins un élément de maintien (1) et d'une unité fonctionnelle (2) d'un véhicule automobile, laquelle unité fonctionnelle est fixée directement ou indirectement à la carrosserie du véhicule et montée d'une manière amortissant les vibrations sur celle-ci au moyen de l' au moins un élément de maintien (1), en amenant une goupille (4) disposée sur l'unité fonctionnelle (2) en prise avec un évidement (3) de l'élément de maintien (1) concerné, l'évidement (3) étant réalisé sous forme de trou oblong dont l'axe principal (6) s'étend dans la direction longitudinale du véhicule (a), **caractérisé en ce que** l'élément de maintien (1) est formé par un corps à stabilité de forme enveloppé d'élastomère et bordant l'évidement (3), lequel corps comprend deux languettes élastiques (5, 5') pénétrant dans l'évidement (3) et disposées en regard sur les côtés longitudinaux de l'évidement (3), par lesquelles un étranglement (7) est formé dans l'évidement (3), lequel étranglement, lors d'un déplacement de la goupille (4) dans l'évidement (3), ne peut être traversé par la goupille (4) qu'en cas de dépassement d'une valeur limite, déterminée par la force de ressort des languettes élastiques (5, 5'), par la partie opérant parallèlement à la direction longitudinale du véhicule (a) d'une force agissant sur l'unité fonctionnelle (2) et provoquant le déplacement correspondant de la goupille (4).

2. Agencement de maintien selon la revendication 1, **caractérisé en ce que** les languettes élastiques (5, 5') sont réalisées de telle sorte que la valeur limite, lors du dépassement de laquelle par la partie opérant dans la direction longitudinale du véhicule (a) d'une force agissant sur l'unité fonctionnelle (2) la goupille (4) peut traverser l'étranglement (7) dans le sens opposé à la direction de conduite, diffère de la valeur limite correspondante pour un déplacement de la goupille (4) dans la direction de conduite.

3. Agencement de maintien selon la revendication 1 ou 2, **caractérisé en ce que** l'unité fonctionnelle (2) est le radiateur d'un véhicule automobile, lequel radiateur est fixé à la carrosserie du véhicule et monté d'une manière amortissant les vibrations sur celle-ci au moyen de deux éléments de maintien (1) ou plus.

4. Agencement de maintien selon la revendication 3, **caractérisé en ce qu'**en fonctionnement normal du véhicule automobile, la goupille (4) de l'unité fonctionnelle (2) pénètre dans l'évidement (3) devant l'étranglement (7) par rapport à la direction de conduite du véhicule automobile, et **en ce que** la force de ressort des languettes élastiques (5, 5') est déterminée par le choix du matériau pour le corps à stabilité de forme de l'élément de maintien (1) et de sa géométrie, de telle sorte que la goupille (4) se déplace derrière l'étranglement (7) lorsqu'une force agit sur celle-ci, si la partie opérant dans le sens opposé à la direction de conduite de cette force dépasse une valeur limite située entre 300 N et 700 N.

5. Agencement de maintien selon l'une quelconque des revendications 1 à 4, **caractérisé en ce que** le corps à stabilité de forme enveloppé par l'élastomère et formant l'élément de maintien (1) est constitué d'un plastique.

6. Agencement de maintien selon l'une quelconque des revendications 1 à 5, **caractérisé en ce que** le contour intérieur de l'évidement (3) de l'élément de maintien (1) est profilé du fait que, le long de ce contour, une pluralité de bombements (11) pénétrant dans l'évidement (3) est réalisée à partir de l'élastomère enveloppant le corps à stabilité de forme de l'élément de maintien.

7. Agencement de maintien selon l'une quelconque des revendications 1 à 6, **caractérisé en ce que** l'élément de maintien (1) est réalisé sous forme d'élément à encliqueter dans une ouverture (10) d'un élément plan (9) de la carrosserie de véhicule ou d'une partie de véhicule reliée à la carrosserie de véhicule, l'élément de maintien (1) comprenant au moins deux ergots d'encliquetage (8, 8'), lesquels, après l'insertion dans l'ouverture concernée (10), glissent sous son bord.

8. Agencement de maintien selon la revendication 7, **caractérisé en ce que** l'élément de maintien (1) est monté dans l'ouverture (10) avec laquelle les ergots d'encliquetage (8, 8') viennent en prise par l'arrière, par le biais d'une lèvre (12), réalisée sur le côté de l'élément de maintien (1) tourné vers les ergots d'encliquetage (8, 8'), de l'élastomère enveloppant son corps à stabilité de forme.

9. Agencement de maintien selon l'une quelconque des revendications 1 à 8, **caractérisé en ce que** l'élément de maintien (1) comprend sur son côté tourné vers l'unité fonctionnelle (2), dans l'élastomère enveloppant son corps à stabilité de forme, un profilage (13) sous forme de plusieurs rainures ou nervures réalisées dans l'élastomère et disposées de manière concentrique autour du bord de l'évidement (3) en forme de trou oblong, contre lequel profilage vient s'appuyer une région, entourant la goupille (4), du contour extérieur de l'unité fonctionnelle (2) à fixer.
